**Europäisches Patentamt**

**European Patent Office**

**Office européen des brevets**

(19)

(11) Publication number : **0 232 993 B1**

(12) # EUROPEAN PATENT SPECIFICATION

(45) Date of publication of patent specification :
04.03.92 Bulletin 92/10

(51) Int. Cl.⁵ : **B60R 19/22**

(21) Application number : **87300486.5**

(22) Date of filing : **21.01.87**

(54) **Vehicle bumper and grille assembly.**

(30) Priority : **27.01.86 GB 8601903**

(43) Date of publication of application :
**19.08.87 Bulletin 87/34**

(45) Publication of the grant of the patent :
**04.03.92 Bulletin 92/10**

(84) Designated Contracting States :
**BE DE ES FR GB IT NL SE**

(56) References cited :
**DE-A- 3 035 176**
**US-A- 3 860 279**
**US-A- 3 922 429**

(73) Proprietor : **FORD MOTOR COMPANY
LIMITED
Eagle Way
Brentwood Essex CM13 3BW (GB)**
(84) **BE ES GB IT NL SE**

Proprietor : **FORD-WERKE
AKTIENGESELLSCHAFT
Werk Köln-Niehl Henry-Ford-Strasse Postfach
60 40 02
W-5000 Köln 60 (DE)**
(84) **DE**

Proprietor : **FORD FRANCE SOCIETE
ANONYME
344 Avenue Napoléon Bonaparte B.P. 307
F-92506 Rueil Malmaison Cedex (FR)**
(84) **FR**

(72) Inventor : **O'Neil, Kevin
114b Bellhouse Road
Eastwood Essex SS9 5NG (GB)**
Inventor : **Lewis, Idris
16 Chamberlains Ride
South Woodham Ferre's Essex CM3 5LX (GB)**

(74) Representative : **Messulam, Alec Moses et al
A. Messulam & Co. 24 Broadway
Leigh on Sea Essex SS9 1BN (GB)**

## Description

This invention relates to a bumper assembly of plastics material with an integral grille as specified in the preamble of claim 1.

A known form of vehicle bumper of plastics material is shown in our GB-A-2 118 489. This comprises a box structure formed from an injection moulded channel section outer member friction welded to a backing plate injection moulded from the same material. This structure has been used on the Ford Sierra vehicle and allows considerable styling freedom together with sufficient strength and energy absorbing characteristics to meet the applicable European regulations. However, a sufficient thickness of material must be used to avoid droop when a vehicle fitted with the bumper is put through a paint over and to provide adequate strength for the bumper to survive low speed collisons without damage.

Improved bumper structures which allow a reduced thickness of plastics shell and obviate the need for an injection moulded backing member without loss of energy absorbing and damagability characteristics are described in EP-A-0 203 699 published with the publication date of 03.12.1986 and GB-A-2 185 714. By reducing the amount of shell material required, the cost and weight of the bumper is reduced.

The vehicle bumper assembly described in EP-A-0 203 699 includes a channel-section outer shell of injection moulded plastics material for extending transversely across the front or rear of a motor vehicle and spaced apart brackets for mounting the bumper on the motor vehicle. The outer shell is substantially filled with an energy absorbing foam adhered to the inside of the outer shell and the mounting brackets have arm portions moulded into the foam filling.

This type of bumper makes effective use of the energy absorbing properties of the foam when used on vehicles which have a cross-member immediately behind the bumper because, in the event of an impact the foam filling is crushed between the vehicle cross-member and the outer shell. The bumper need not have great beam strength because the main run is supported against bending in the event of an impact between the supporting brackets by contact of the foam filling with the vehicle cross-member. Another foam filled plastics bumper described in GB-A-2 151 993 uses a beam like backing member to give the structure sufficient beam strength.

The bumper structure described in GB-A-2 185 714 is suitable for use in vehicles that have no cross member immediately behind the bumper. A flexible strap interconnects the mounting brackets. In use, the strap interconnects the ends of two longitudinal frame members of a vehicle so that impact in the centre region of the bumper produces tension in the strap which is tranferred to the vehicle frame members. Becuse the strap operates in tension rather than as a beam it need only be of flexible, lightweight construction.

The present invention is directed to a foam filled bumper of the kind described above but having an integral grille.

It is known to use the friction welded box structure described in UK Patent Application No. 2 118 489 for a bumper with an integral grille and an assembly of this kind according to the preamble of claim 1 is shown in our Registered Design No. 1 024 512.

Difficulties have been encountered in providing a self-supporting grille bar. One known solution is to use additional fastening means to attach the grille bar to the vehicle body structure. Another known solution is to provide a sheet metal reinforcing member pressed into the rear of the grille bar after moulding. Both of these solutions add cost and weight.

According to the present invention, there is provided a vehicle bumper and grille assembly comprising a channel-section outer shell of injection moulded plastics material for extending transversely across the front of a motor vehicle and having an integrally moulded grille comprising a rearwardly open grille bar and end supports, the transversely extending portion of the outer shell being substantially filled with an energy absorbing foam adhered to the inside of the outer shell, characterised in that apertures in the upper surface of the outer shell behind the grille supports enable foam to flow from the space bounded by the outer shell to the space bounded by the grille supports and the grille bar during a foaming process to provide a foam filling adhered to the grille as well as the foam filling adhered to the bumper shell.

The bumper structure of the present invention enables a foam filling to be provided for both the bumper and the grille in the same foaming step. The foam filled grille bar is self supporting.

The invention will now be described further, by way of example, with reference to the accompanying drawings, in which:

Figure 1 is a perspective diagrammatic view from above of the rear of a motor vehicle from bumper and grille assembly embodying the invention;

Figure 2 is an enlarged rear view of the bumper and grille assembly of Figure 1 showing ony the portion indicated by the arrow II in Figure 1; and

Figure 3 is a section along the line III-III of Figure 2.

A vehicle front bumper and grille assembly 10 embodying the invention comprises an outer shell 12 of injection moulded polycarbonate plastics material. The shell 12 is of generally channel section with a transversely extending main run 14 with integally moulded end portions 16 and 18 each of which extends along a respective side of the vehicle (not shown) to which it is fixed.

The outer shell 12 is supported and strengthened by a foam filling 24 formed in situ in the main run 14 of the shell 12 with rearwardly extending runners 26 which underlie and support the upper surfaces of end portions 16 and 18.

A grille 20 is formed integrally with the outer shell 12 and comprises a grille bar 22 connected to the bumper shell 12 by grille supports 21. Both the grille bar 22 and the grille supports 21 are of rearwardly open channel section and they are formed integrally with the shell 12 of injection moulded polycarbonate plastics material.

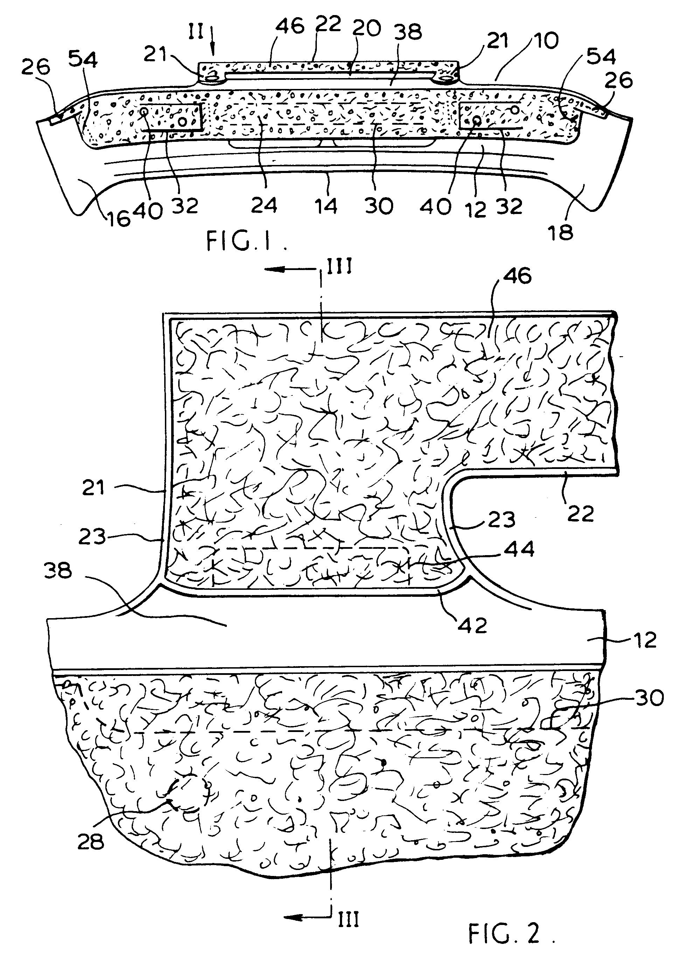

Referring now to Figure 2, the walls 23 of grille support 21 extend from the upper surface 38 of the bumper shell 12 which extends beneath the support without interruption so that shell 12 forms a continuous channel.

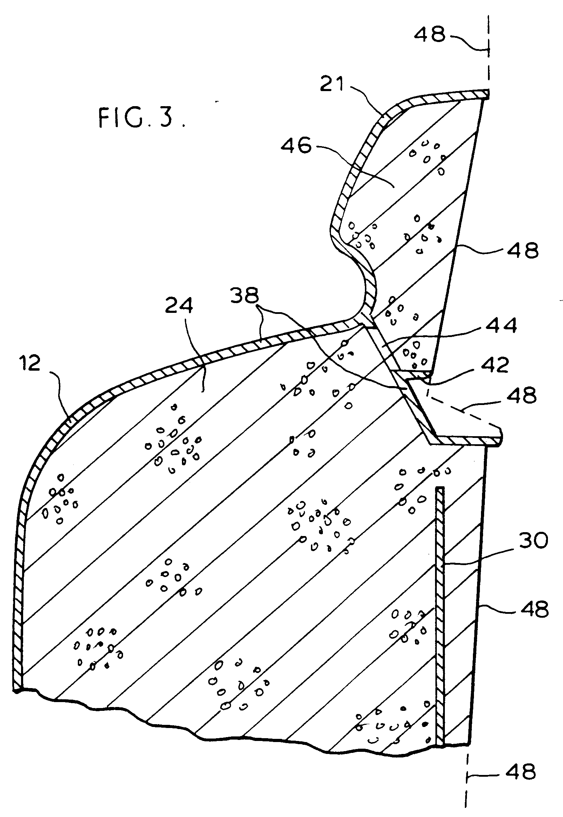

A sealing lip 42 extends along the upper surface of the bumper shell between the walls 23 of each grille support 21 (see also Figure 3). An aperture 44 is formed in the upper surface 38 of the bumper shell 12 above and in front of each sealing lip 42.

The space bounded by the walls 23 of grille supports 21, the sealing lips 42 and the grille bar 22 is filled with foam 46. Foam filling 46 is formed from foamable plastics material which has passed through the apertures 44 as described below. It adheres to the inner surface of the polycarbonate grille bar thereby supporting and strengthening it.

Two sheet metal mounting brackets 32 are welded one at each end of a flat elongated, flexible sheel metal strap 30. The assembly of strap 30 and mounting brackets 32 is moulded into the foam filling 24. Apertures 28 in this assembly allow the foam to flow through during the foam moulding process. Adhesion of the foam to the brackets 32 and the key provided by their shape ensures good retention of the brackets in the foam filling over the lifetime of the bumper.

Bolts 40 fixed to each mounting bracket 32 enable fastening of the mounting brackets 32 to the forward ends of vehicle longitudinal frame members (not shown). The rear ends of the end portions 16 and 18 are supported on the vehicle front fenders by fastening means described in GB Patent Application GB-A-2 118 489.

Impact absorption requirements for the end portions 16 and 18 can be met without a full foam filling. The filling is carried round the corners of the bumper up to surfaces 54. The runners 26 and 28 line only the upper part of the end portions 16 and 18 to support the upper surfaces against any tendency to sag when the vehicle is put through a paint oven.

The bumper is made by a method similar to that described and claimed Patent Application No. 8511191. The outer shell is placed in one part of a moulding tool. A vacuum formed polypropylene liner is held in place on the outer part of the moulding tool by vacuum. The liner and contacting face of the tool have the shape required for the outer surface of the foam filling 24 of the shell 12 and the foam filling 46

of the grille 20 as indicated by the dotted line 48 in Figure 3.

The tool is closed with the mounting bracket and strap assembly in its required position relative to the outer shell 12. A two component polyurethane foam material made by mixing a polyol and an isocyanate is introduced into the main cavity of the moulding tool bounded by the shell 12 and allowed to react and foam to fill the main mould cavity,

The foamable material passes through the apertures 44 to fill also the secondary cavity bounded by the grille 20 and the sealing lips 42. The sealing lips 42 fulfill an important function in enabling sealing of the secondary cavity. Attempts to seal the secondary cavity by contact of the moulding tool against the upper surface of the shell 12 resulted in unacceptable foam leakage.

After partial curing the bumper is removed from the mould and left to finish curing with the liner over the outer surface of the foam. When the foam is sufficiently stable the liner is removed and reused in subsequent foaming operations.

The foam material is selected for energy absorbing properties and for good adhesion to the polycarbonate shell and to the metal of the mounting bracket and strap assembly. The polypropylene liner prevents adhesion of the foam to the mould without requiring the use of liquid release agents which have to be cleaned off the finished bumper and can cause paint adhesion problems during later finishing processes.

In the event of a frontal impact both the outer shell 12 and the foam filling 24 contribute to the energy absorbing characteristics of the bumper. The beam strength of the bumper is not significantly increased by the strap 30 but by acting in tension and thereby transferring frontal impact forces to the vehicle frame members (not shown), the strap greatly improves the energy absorbing capacity of the overall assembly in conditions of impact against the central region of the bumper. The foam filling 46 of the grille 20 renders it self-supporting.

## Claims

1. A vehicle bumper and grille assembly (10) comprising a channel-section outer shell (12) of injection moulded plastics material for extending transversely across the front of a motor vehicle and having an integrally moulded grille (20) comprising a rearwardly open grille bar (22) and end supports (21), the transversely extending portion (14) of the outer shell (12) being substantially filled with an energy absorbing foam (24) adhered to the inside of the outer shell (12), characterised in that apertures (44) in the upper surface of the oute shell (12) behind the grille supports (21) enable foam to flow from the space bounded by the outer shell (12) to the space bounded by the grille supports (21) and the grilled bar (22) during a foaming process to provide a foam filling (46) adhered to the grille as well as the foam filling (24) adhered to the bumper shell (12).

2. A vehicle bumper and grille assembly as claimed in Claim 1, characterised in that a sealing lip (42) extends from one side of each grille support to the outer between the aperture (44) and the adjacent edge of the shell (12) to provide a rearwardly open recess containing the foam filling (46).

3. A method of making a bumper and grille assembly (10) as claimed in any one of the preceding claims, wherein :

a) the outer shell (12) is mounted in one part of a moulding tool so that the portion thereof to be adhered to the foam filling (24) forms a wall of the mould cavity; and

b) the tool is closed and a plastics material is foamed within the cavity to form the foam filling (24) of the bumper;

characterised in that:

c) the inner surface of the grille bar (22) and grille supports (21) form with the other part of the moulding tool a further moulding cavity connected to the main moulding cavity by the apertures (44), the foam flowing through said apertures from the first cavity to fill the second cavity and thereby form the foam filling (46) of the grille (20).

## Patentansprüche

1. Fahrzeugstoßstangen- und Kühlergrillbaugruppe (10), bestehend aus einer äußeren U-Profil-Schale (12) aus Spritzgußkunststoffmaterial, die sich quer über die Vorderseite eines Krafffahrzeugs erstreckt, und mit einem integral angeformten Kühlergrill (20), bestehend aus einer nach hinten offenen Kühlergrillstange (22) und Endträgern (21), wobei der sich quer erstreckende Teil (14) der äußeren Schale (12) in beträchtlichem Umfang mit einem energieabsorbierenden Schaumstoff (24) gefüllt ist, der an der Innenseite der äußeren Schale (12) haftet, dadurch gekennzeichnet, daß der Schaumstoff aufgrund von Öffnungen (44) in der Oberfläche der äußeren Schale (12) hinter den Kühlergrillträgern (21) in der Lage ist, während eines Schäumungsprozesses von dem durch die äußere Schale (12) abgegrenzten Bereich zu dem durch die Kühlergrillträger (21) und die Kühlergrillstange (22) abgegrenzten Bereich zu fließen, damit neben der an der Stoßstangenschale (12) haftenden Schaumstofffüllung (24) auch eine am Kühlergrill haftende Schaumstofffüllung (46) vorhanden ist.

2. Fahrzeugstoßstangen- und Kühlergrillbaugruppe nach Anspruch 1, dadurch gekennzeichnet, daß sich eine Dichtungslippe (42) von einer Seite jedes Kühlergrillträgers zur äußeren zwischen der Öffnung (44) und der angrenzenden Kante der Schale (12) erstreckt, um eine nach hinten offene Aussparung zu bilden, die die Schaumstofffüllung (46) enthält.

3. Methode zur Herstellung einer Fahrzeugstoßstangenund Kühlergrillbaugruppe (10) nach einem der vorangegangenen Ansprüche, wobei:

a) die äußere Schale (12) in einem Teil eines Formwerkzeugs angebracht wird, so daß der Teil, der an der Schaumstofffüllung (24) haften soll, eine Wand des Formenhohlraums bildet; und

b) das Werkzeug geschlossen wird und ein Kunststoffmaterial in dem Hohlraum geschäumt wird, um die Schaumstofffüllung (24) der Stoßstange zu bilden;

dadurch gekennzeichnet, daß:

c) die Innenfläche der Kühlergrillstange (22) und die Kühlergrillträger (21) mit dem anderen Teil des Formwerkzeugs einen weiteren Formenhohlraum bilden, der mit dem Hauptformenhohlraum durch die Öffnungen (44) verbunden ist, und der Schaumstoff durch die genannten Öffnungen vom ersten Hohlraum in den zweiten Hohlraum fließt, um ihn zu füllen, und dadurch die Schaumstofffüllung (46) des Kühlergrills (20) bildet.

## Revendications

1. Ensemble de pare-choc et de grille pour véhicule (10) comprenant un corps extérieur en profilé en U (12) de matière plastique moulée par injection dans le sens transversal à l'avant d'un véhicule à moteur et comportant une grille moulée solidairement (20) comprenant une barre de grille ouverte vers l'arrière (22) et des supports d'extrémité (21), la partie dans le sens transversal (14) du corps extérieur (12) étant presque totalement remplie avec une mousse d'absorption de l'énergie (24) collée à l'intérieur du corps extérieur (12), caractérisé en ce que des ouvertures (44) dans la surface supérieure du corps extérieur (12) derrière les supports de grille (21) permettent à la mousse de s'écouler depuis l'espace délimité par le corps extérieur (12) vers l'espace délimité par les supports de grille (21) et la barre de grille (22) pendant un processus de moussage pour fournir un remplissage de mousse (46) collé à la grille de même qu'un remplissage de mousse (24) collé au corps du pare-choc (12).

2. Ensemble de pare-choc et de grille pour véhicule selon la revendication 1, caractérisé en ce qu'une lèvre d'étanchéité (42) s'étend depuis un côté de chaque support de grille vers l'extérieur entre l'ouverture (44) et le bord adjacent du corps (12) pour procurer un évidement ouvert vers l'arrière contenant le remplissage de mousse (46).

3. Procédé pour fabriquer un ensemble de pare-choc et de grille (10) selon l'une quelconque des revendications précédentes, dans lequel :

a) le corps extérieur (12) est monté dans une partie d'un outil de moulage de sorte que sa partie qui doit être collée au remplissage de mousse (24) constitue une paroi de la cavité de moule et

b) l'outil est fermé et une matière plastique est mise à mousser à l'interieur de la cavité pour former le remplissage de mousse (24) du pare-choc ;

charactérisé en ce que

(c) la surface intérieure de la barre de grille (22) et des supports de grilles (21) forment avec d'autres parties de l'outil de moulage une autre cavité de moulage connectée à la cavité de moulage principale par des ouvertures (44), la mousse s'écoulant à travers les ouvertures depuis la première cavité pour remplir la seconde cavité et former de ce fait le remplissage de mousse (46) de la grille (20).

FIG. 1 .

FIG. 2 .

FIG. 3.